Europäisches Patentamt

European Patent Office

Office européen des brevets

(11) Publication number: **0 171 859 B1**

# EUROPEAN PATENT SPECIFICATION

(45) Date of publication of patent specification: **22.12.93** (51) Int. Cl.⁵: **G06F 12/14**

(21) Application number: **85201290.5**

(22) Date of filing: **09.08.85**

(54) **Memory access control device for implementing guarded regions in a memory, and memory provided with such memory access control device.**

(30) Priority: **17.08.84 US 641793**

(43) Date of publication of application:
**19.02.86 Bulletin 86/08**

(45) Publication of the grant of the patent:
**22.12.93 Bulletin 93/51**

(84) Designated Contracting States:
**DE FR GB IT**

(56) References cited:
**US-A- 4 104 721**

**COMMUNICATIONS OF THE ACM, vol. 15, no. 3, March 1972, pages 157-170; M.D. SCHROEDER et al.: "A hardware architecture for implementing protection rings"**

**ELECTRO/81 CONFERENCE RECORD, vol. 6, 7th-9th April 1981, pages 1-5, New York, US; R. CHILDS: "The iAPX 286 architecture memory management and protection model"**

(73) Proprietor: **N.V. Philips' Gloeilampenfabrieken Groenewoudseweg 1 NL-5621 BA Eindhoven(NL)**

(72) Inventor: **Freeman, Martin INT. OCTROOIBUREAU B.V. Prof. Holstlaan 6 NL-5656 AA Eindhoven(NL)**
Inventor: **Kaplinsky, Cecil Hertz INT. OCTROOIBUREAU B.V. Prof. Holstlaan 6 NL-5656 AA Eindhoven(NL)**

(74) Representative: **Strijland, Wilfred et al INTERNATIONAAL OCTROOIBUREAU B.V. Prof. Holstlaan 6 NL-5656 AA Eindhoven (NL)**

## Description

Background of the invention

The invention relates to a computer system comprising a processor and a memory, coupled to each other via address translation means for translating virtual addresses issued by the processor into physical addresses applied to the memory, the translation means being arranged to use a plurality of translation tables for at least one process executable on said processor, each table directing how a respective programmable region of virtual address space is to be translated, the system comprising gate means, storing an entry point address.

The invention also relates to a memory address control device (on MAC as it will be called for brevity hereinafter), for such a system, and a memory system.

The Mac is to be interconnected between a processor and a memory for executing certain control functions with respect to the memory. In particular, it has been found necessary to implement techniques for limiting access to certain addresses in the memory when embedded in a computer system. More specifically, the invention envisions to realize the concept of guarded regions. The guarded region concept is a protection mechanism which allows protected access to code (instructions) and data without either involving the operating system or the supervisory state of the processor. The guarded region gives quick access to these protected resources, provides a form of dynamic linking of routines to manipulate these resources and provides a protected access path to a resource on the basis of a prescribed necessity to use the so protected resources.

It has been found that protection schemes must be hardware-based to allow for producing reliable software. Such protection schemes would the allow detection of software errors earlier in the development cycle. Also, faulty software would not corrupt other, properly running software modules. Known protection schemes may be complex and difficult to use, but most schemes seek to restrict access to portions of an address space.

Limited description of virtual addressing schemes

Virtual memory management hardware contains a mapping mechanism that translates "virtual addresses," issued by the processor, into the physical addresses of the RAM. Technological rationale behind virtual addressing is well known in the art and will not be discussed for brevity. Now, in systems, if the virtual to physical translation cannot be made (because the required data is still resident on disk), the processor is interrupted (even if in the middle of an instruction) and forced to enter the operating system memory management routine. This routine initiates a transfer from the disk to RAM. If necessary, it will first move blocks from RAM to disk to make space. Once started, these disk transfers take place under program control while the processor also executes other instructions.

There are many ways to map the virtual to physical addresses. In order to reduce the size of the mapping table, this is not done at a word level but in groups of consecutive words. Two main schemes are poplar. The first maps a fixed-length page. A typical page, which is essentially a trick by the hardware to subdivide artificially the address space, consists of 512 to 4096 consecutive bytes that are mapped, as a whole, onto a location on the disk or into the RAM.

The alternative scheme is to use segments. A segment is a variable length section of the address space that is a logical entity to the programmer and is mapped as a whole onto the disk and/or the RAM address space. Typical segment sizes vary from a few bytes to the whole address space.

Some system architectures (e.g. an IBM 370) allow the programmer to divide logical segments to separate logically distinct entities (a module of code, a stack, data etc.). However, allowable values for the segment length step in fairly large steps, around 2k bytes. The segment is physically split into pages that are individually mapped onto the various devices in the memory hierarchy. This allows easy placement of pages in memory while providing the programmer with a method of dividing the address space into logically distinct segments.

Further division mechanisms of the address space

Although segments allow subdivision of programs and data into intellectually manageable chunks , it is necessary to define a division of the address space between the program and the operating system. Ideally, one would like to realize this division by having two separate address spaces. The 68010 (Motorola) microprocessor allows this to be done by hardware using the FC2 pin. However, this arrangement slows down

EP 0 171 859 B1

calls to the operating system because all parameters have to be transferred between the two address spaces by means of a special instruction.

Computers such as the VAX (Digital Equipment Corporation) use a different solution. They divide the address space into "regions", each with a its own translation table so each can be managed individually. The operating system kernel has access to all regions and can thus easily get at the process-dependent data. However, user-generated programs do not have access to the system address space for security reasons. The 32-bit address space of a VAX is divided into three fixed size regions.

A memory management unit (MMU) provides mechanisms which include memory mapping and protection of access. A user's program may be protected in a number of ways. For example from US 4,104,721 it is known to tag each address with an indication of the address space it is associated with. Accessing an address space without permission causes a system error; e.g. accessing the supervisor data space without having supervisor permission. In general, the whole system address space may be broken up into subspaces, where permission is necessary to access a subspace. Permission may be associated with a processor mode, and processor mode change instructions are used to change permission levels. Typically, a trap instruction is used to change a processor's mode from user mode to supervisor mode. Once in supervisor mode, supervisor permission is granted, with associated access permission.

Operating systems use this technique to implement system calls to the system software. This is effected by means of an interrupt or trap. This causes a controlled jump into the supervisor space, while at the same time changing processor mode. In this way, the actual processor mode represents an associated version of access protection, which may differ from one processor mode to another. Access protection via processor modes, however, has its drawbacks, in that, for example, the following operations give rise to appreciable overhead effort, thus effectively slowing down the total system: (1) changing and restoring processor state, (2) mapping or moving arguments in the calling address space to the called address space, and (3) validating the size and composition of arguments. For instance, implementing a call to supervisory software in a typical operating system would involve invoking a trap instruction, determining the trap type, getting the supervisory call arguments, and validating those arguments.

Address spaces must first be delimited in order to be protected. One standard technique is to partition an address space into segments -- variable-sized sections of memory. A related group of segments determines an address space. Typically, a segment is identified by a segment descriptor, and an address space is identified by a table made up of segment descriptors; i.e. a segment table. A process's address space can be partitioned into variable-sized regions, each such region having its own segment table. One region might contain the operating system kernel, another the user's code, and yet still another library code common to all processes. Regions allow sharing of code. Each region has associated with it a segment table pointer, pointing to the segment table in question, and also a segment table length quantity. Typically, these values are present in special registers.

In most existing system implementations today, hardware does not contain any provision for altering such protection mechanisms. All protection is done by the software. Any call to a protected routine causes a hardware-generated trap and a call to a supervisory program. The context or state (register contents, basic parameter values, and the like) of the instruction currently under execution in the processor is then stored for saving and a new program with associated context is loaded. This new program examines the request, and, if it is granted, a new context is created that permits entry to the requested routine. Typically, the above operations take up to 300 microseconds.

Existing systems with additional protection facilities divide the address space into a set of hierarchical so-called concentric rings. Such systems are described for example in an article titled "A hardware architecture for implementing protection rings" by M.D. Schroeder et al. in the communications of the ACM Vol. 15, No. 3 (March 1972) pages 157-170 and in US 4,104,721. Also in an article titled "The iAPx286 architecture: memory management and protection level" by R. Childs, in the Electro/81 Conference record, Vol. 6 (1981) April 7-9 New York, N.Y. USA, pages 1-5 a hierarchical organization of address space in to rings which may be entered through gates is described. Each ring or partial address space is defined by an associated address, the so-called 'radius' of the ring. In any given ring, a program has access to the address space of its own ring and the address space of all the rings outside itself. Transition from an outside ring to an inner ring is not possible directly, but is controlled by so-called 'gate' mechanisms. Each gate contains conditional information, and also an indication giving an entry point at which an associated ring may be entered. Though rudimentary and hierarchical, this technique clearly works, and allows protected systems to be built.

3

Selected objects of the invention

The present invention, on the one hand, details a new mechanism for access protection that is more general than the typical processor mode protection explained hereabove. Moreover, it is simpler to use, and more efficient, especially when protection capabilities differ between respective user processes.

Moreover, the guarded region technique presented herein not only restricts access to a portion of an address space, but also allows its re-definition. Depending on the associated system software, multiple definitions may exist for the same software routine.

The invention realizes the improved by protection features by the measures recited in the claims. Advantageously, such measures are realized in a single integrated circuit chip. Furthermore, the invention relates to a memory provided with a memory access control device according to the above. Such device could be co-mounted with memory chips on a printed circuit board. Alternatively it could be co-integrated with all or part of the memory controlled by it.

Brief description of the drawings.

The invention, by way of illustration and not by way of limitation is further described with reference to the following figures. Hereinafter, first the general features of the invention are explained further. Next, a preferred embodiment is described in detail.

Fig. 1 is a block diagram illustrating the architecture of the Memory Access Controller in which this invention is used;

Fig. 2 is a diagrammatic illustration of the concept of regions;

Fig. 3 shows an exemplary format of a gate descriptor;

Fig. 4 shows an exemplary format of a special segment called a gate module;

Fig. 5 shows an exemplary format of the instruction JMP MAC address.

General features of the invention

The invention, as partial aspect of a memory access controller (MAC) addresses the problem of combining solutions to the following problems on a single piece of silicon:

interfacing subsystems in a processor memory system, solving processor/memory speed mismatch, translation of virtual addresses, control of several memory hierarchies, buffering of bus accesses and control of virtual I/O. The net result of combining these features is to allow system designers to convert a "computing nucleus" ( a 68010 or 68020 microprocessor) into systems with the throughput of a VAX. The resulting system, which offers a variety of user-selectable virtual memory schemes, can be expanded into a multiprocessor system by the addition of one or more processor /MAC pairs and small changes at the lowest level of the operating system.

One important feature is that the MAC allows users to define their own protection schemes; the choices include no protection, "normal" protection as used in virtual memory systems, and a capability-like, guarded region design, the first of its kind to be implemented on silicon.

Architectural specifics of a preferred embodiment

In a preferred embodiment, system designers can subdivide the address space into one to four regions. Unlike the VAX, if a region is not used, it does not substract from the address space available to the other regions. The only restrictions on regions that apply, are that the part thereof within a partition be continuously and that the partitions be contiguous.. Each region has its own translation tables and in a practical example can vary in length from 3.25% to 100% of the total address space.

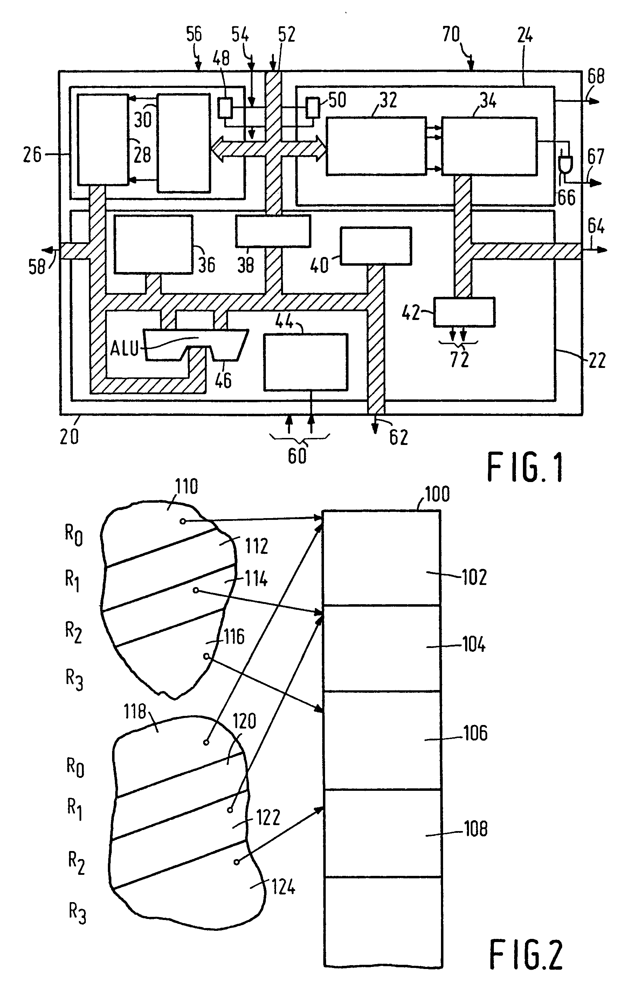

The MAC allows a process's virtual address space to be situated in up to four different regions. Regions are useful for sharing code and data. For instance, a process may have four regions where region 0 is dedicated to the operating system kernel, region 2 is dedicated to a system library, and region 3 is dedicated to process specific code and data. An example thereof is given in Fig. 2, where two processes A,B, both use the operating system kernel 102, used respectively in their own regions 110, 118, respectively. Furthermore, the two processes store system library 104 in the same way. However, they have privy access to their own code and data, in parts 106, 108, respectively of system memory 100. Sharing at this level is quite useful. In a typical UNIX program there may be several references to the system subroutine library. A small program may increase its effective size (as measured in numbers of operable lines of code) several times when it may call routines from this library. The system library thus obviates the

4

need to replicate every callable routine for every linked program. Now, each library subroutine entry point would be represented by a fixed element of the virtual address apace of each respective user program.

Each of the four possible regions has an associated segment table. When the contents of a virtual location cannot be found with on - chip MAC resources, one or more segment tables are accessed successively for addressing associated main memory locations. The MAC determines the most appropriate segment table to start this walking procedure by mapping the most significant five bits of the virtual address into a region number.

The MAC, by this feature, works with a virtual address space that is split into 32 pieces. The region partitions contain a number of these pieces. Thus, for example a two-region system might have 12 pieces in region 0 and 20 pieces in region 1.

To support four regions the MAC contains four register pairs; each register pair consists of a segment table pointer register and a segment table length register.

A typical system is configured with three regions. One contains the operating system kernel; the second contains all the shared utilities and libraries and the third contains the user program and data. Normally the first two remain unchanged while the third naturally changes as different programs commence execution (cf. Fig. 2).

Memory System Protection

Memory protection means the ability to selectively define and structure access to each region, segment or page. It is implemented by including the protection information with the translation tables. Each entity, either a segment or a page, can be given at least five different protection attributes ( however, more are possible):

1. Accessible only in system state;
2. Executable -- i.e., can be run as a program;
3. Can be read as data;
4. Writeable;
5. Invalid -- i.e., mapping does not exist.

If a non-allowed access is made (i.e., the processor tries to execute code from a page that is non-executable), the MAC will not complete the memory access; instead, it generates a bus error (BERR) signal to the processor so that the operating system can decide what should be done.

All protection bits can be used at either the segment or the page level, depending upon which scheme is used. In addition, if a permission is granted at one level, it can be turned off at another level. This allows operating systems that use "Copy On Write" to be easily implemented. For brevity, the specific use of these protection attributes is not discussed further.

The MAC'S protection abilities go beyond these five attributes. In general, protection is performed by two interacting mechanisms. The first mechanism is implemented in a mapping table. Since all virtual addresses issued by the processor are translated via the mapping table into physical addresses, if the mapping is marked invalid, the program cannot access that address or memory module.

This constitutes a rudimentary form of memory protection capability, where a process is given an explicit set of access rights to the objects or modules that it needs, but no others. However, these access rights must be augmented to achieve an efficient, fully protected system. One powerful mechanism available with the MAC is to ensure that extensions to code and data, currently available to a process, can be requested and granted, dynamically.

To guarantee that the added code is used as intended, it is necessary to restrict code access to a set of given entry points. In turn, access to extra code generates a need to also access other data. For example, if a file system implements a set of entry points (say one for read, one for write, one for open and one for close), then the code to perform these actions needs access to some system-wide tables that embody the state of the file system. However, these tables should be hidden from the user program.

In addition, the file system needs to read and write to the disk, a task that calls on routines that themselves need data that should remain hidden from the file system.

Guarded Regions

Besides the typical access protection associated with permission bits on segment and page descriptors, the MAC provides additional protection through a scheme known as guarded regions. A guarded region is a region that may only be entered through fixed entry points that are defined by gates.

A gate consists of a segment table pointer, a segment table length, and an entry point. When permission is granted, the region is redefined by the gate's segment table pointer and segment table length fields, and the program counter is set to the gate's entry point. The user process is now executing code in a region whose contents has just been re-defined. When returning from this gate call, the process picks up from the point after the gate call. Just like subroutine calls, gate calls can be nested.

Thus, gates are capabilities to enter routines that cannot be gotten to in any other way. The guarded region containing these routines is not initially a part of the process's address space, but temporarily becomes a part of it. This is in distinction to the approach of rings of protection where all "outer"-routines are in a process's address space, but without the appropriate gate at the right ring level, access cannot be achieved. In contradistinction thereto, the 'guarded region' concept is supported by hardware.

In this concept, a segment (marked in its descriptor as a gate segment contains a list of gates. Each gate contains an allowed entry point as well as pointers to new context information. This context information contains a new lists of mapping tables as well as a new list of gates. Thus, a new set of routines can be made available as the addresses now have a valid, or new, mapping. Data tables are made available in the same way. On entering a gate, the return information is placed on a special stack, not accessible to software, and is used on exit from a guarded region.

The actual mechanism to be implemented can be defined by the system designer by writing a small section of code that is run by the microprocessor/MAC pair under special, carefully defined conditions. Gates are replaced when a guarded region is entered, thus, no check need be done on entry as the fact that the gate was available to the calling program implies that it had permission to use the gate.

Each program can have a set of entry point gates to the file system. When one is used, then and only then is the code to perform the actions and the tables defining the state available to the processor. In addition, the new set of gates will give the file system access to the disk handling routines. When these are accessed through a gate, the needed code and data is made available. The tine needed to perform this depends upon the particular action. However, a non-hierarchical system can be implemented so that entering a guarded region will take less than 30 microseconds.

Relation of the preferred embodiment to the 68010/20 microprocessors.

The Motorola 68010 and 68020 virtual memory microprocessors provide a computing nucleus for constructing supermicrocomputer systems with the performance of high-end minicomputers like the VAX (Digital Equipment Corporation). A computing nucleus becomes a high performance computer only after it is placed in a design which meets desired performance specifications. This task challenges the designer to find VLSI component which allow the theoretical performance of the nucleus to be the actual performance of the real system.

The ideal performance of a microprocessor always degrades in real system design, because of the delay inherent in the processor's memory management technique as well as in the associated system memory and its interface.

Processors have always been faster than memories. Since it is inherent in the technology, the speed mismatch can be ameliorated (but not entirely eliminated) through architectural techniques such as memory hierarchies.

In such a hierarchy, a small, fast cache memory is closest to the processor. The cache is dynamically loaded with a copy of the contents of each processor memory reference, both program and data. Typically, up to 95% of all memory read references will be found in a 16K byte cache.

Management of a cache is the first system problem addressed to the MAC, which contains all the logic and identification memory to control a cache which in the embodiment be configured by the user to between 1K byte and 32K bytes.

A second system problem is memory management. In this role, the MAC serves the full addressing range of its companion microprocessor through a flexible arrangement of memory divisions. The MAC can divide the address space in pages (the user selects the size), segments (user choice over the full address space) or paged segments (to avoid the need to locate segments in contiguous areas of memory).

Finally, the MAC provides a solution to input/output: virtual I/O. The advantage here is the creation of a virtual address bus between the microprocessor and I/O controllers. System speed goes up rapidly as a result.

Thus, the MAC can be regarded as a "system chip" which combines with a microprocessor to provide all the elements needed for a true high performance system. Since the MAC is the first such system element to have been integrated in this fashion, it is free of some of the restrictions that have limited previous designs. As a consequence, some new solutions to old problems have been found which speed up the system.

## Architecture of the MAC

Fig. 1 is a block diagram illustrating the architecture of the Memory Access Controller, according to a preferred embodiment and to be realized onto a single chip of silicon. The MAC 20 contains three main subsystems: Cache controller 24, translation look-aside buffer 26 and microcontroller 22. The cache controller 24 provides all necessary match and control logic for an external static RAM cache. Such cache on a hardware level is known in the art and will not be discussed further. The cache controller 24 comprises a content addressable memory 32 which is addressable by high order virtual addresses receivable on bus 52.

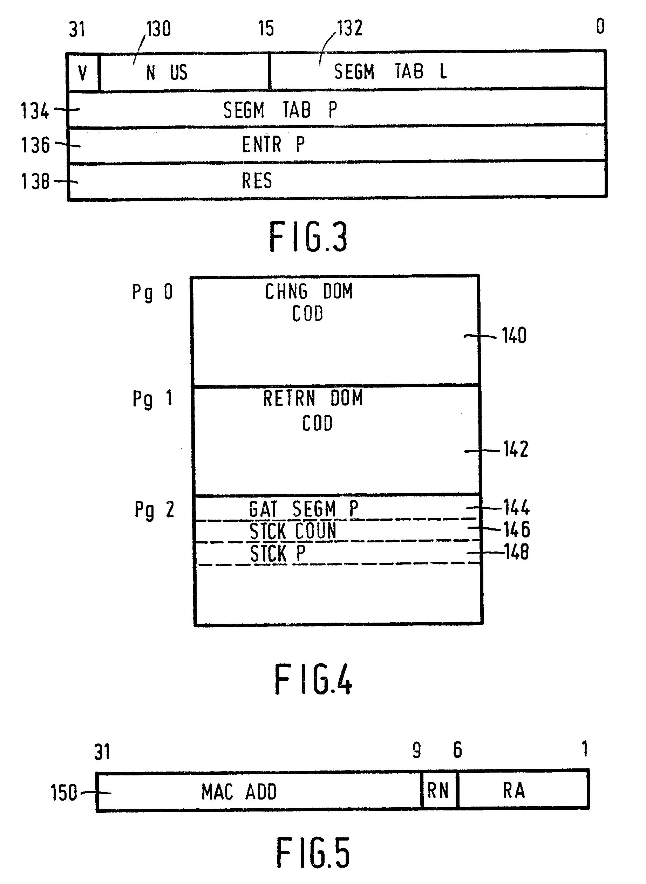

An equality signal from content addressable memory 32 will address an associated location in random memory 34. The latter will thereupon output low order virtual and physical addresses on output bus 64. Cache controller 24 is furthermore provided with protection logic. This logic receives a subset of the high order virtual addresses on bus 52 and further such addresses on input 54 parallel therewith to implement protection schemes as hereinafter described with respect to Figs. 3-5. As shown, this protection logic is provided with an output for outputting relevant control signals to other parts and subsystems of MAC. There is furthermore provided a 'hit' AND-gate 66 which has one input from RAM 34 and a further input from the protection logic not specifically shown. If both signals are '1', a 'hit' occurs and line 67 would carry a signal 'data acknowledge out'. Furthermore, a cache control signal on line 68 is forwarded from cache controller 24 to the cache connectable thereto. Note that due to the limited capacity of the cache memory, it would need only a low number of physical address bits (14 for a 16 kB cache). For brevity, the procedures for updating the contents of memories 32, 34 are not described in detail.

The translation look-aside buffer is used to translate a virtual address into its physical address counterpart in system memory. To this effect the translation look-aside buffer also comprises a content addressable memory 30. Further there is provided a page descriptor RAM 28 that is addressed by output signals from memory 30. Outputs from RAM 28 are connected to bus 58. In parallel with protection logic 50, a somewhat similar protection logic 48 is provided in the translation look-aside buffer 26.

Microcontroller 22 is used among other things to update contents of the translation look-aside buffer 26. Furthermore, many different address operations are executed hereby. To this effect there is provided a barrel shifter 38 for interfacing to bus 52, by which a shift of significance levels of addresses may be affected. Furthermore a register bank 36 is provided. Further an ALU 46 is provided for adding address quantities and executing other arithmetic functions. All these elements are interconnected to bus 58 which is connected for outputting the physical address upon generation thereof. Control register 40 stores appropriate control data. Bus controller logic 44 bidirectionally communicates control signals (such as receivable on lines 60) with the processor, not shown, and with main memory, not shown, for example, to effect a bus handshake protocol. Furthermore, microcontroller 22 comprises decoding logic connected to bus 64. Herein specific control signals are developed for selections of registers in register bank 36, and also for control of the microcode sequencer, which is conventionally present in microcontroller 22, but which has not been shown for brevity. Finally, a read/writer control signal is receivable on input 56.

It should be noted that most of elements shown in Fig. 1 on a block level are conventional, but their novelty and advantage is situated in their combination and newly attributed functions. Therefore, these functions will be more specified in detail hereinafter.

The cache controller and TLB speed-up the system since most reads will be supplied from the cache, many writes will be overlapped with subsequent reads, and MAC MMU actions occur in parallel with MAC cache actions.

## PREFERRED EMBODIMENT

The contribution of this work is the combination of the region concept with the protection domain concept to yield guarded regions. Guarded regions have the advantage of (1) giving quick access to new resources, (2) providing a form of dynamic linking of routines to manipulate these resources, and (3) providing a protected access path to a resource on a need-to-know basis. For the most part, a guarded region defines a set of resources that a process can access through associated gates. Resources in this case should be thought of as routines that manipulate data structures, as well as new gates for other resources. Initially, a process will start off with a defined set of gates associated with its guarded region. Access to resource in that region through a gate using a domain call results in the redefinition of the contents of the region's address space. There is no other way that the process can access the resource, since the resource is not (initially) in the process's address space. Moving from domain to domain in a guarded region is essentially a walk through a branched tree, where an access path to a resource corresponds to a branch of the "access tree". Guarded regions are useful in changing definitions of routines in a transparent, protected manner. For instance, a programm may use primitive operations "add", "delete", "insert" on a particular data structure and make reference to certain gates for these primitives. Sometime later the underlying data structure may be changed, but the same gate numbers can be used if there is a domain change to an analogous set of gates for that new data structure. This facility could be useful in menu-like systems. Thus, changing domains can result in a different binding of gate number to routine, effectively yielding a dynamic linking facility.

Detailed description of the guarded region implementation.

Guarded regions are a way of insuring that operations and their data structures can be protected against improper access. A guarded region is an address space (or domain) which may only be entered through a gate or gates. A gate is a capability (or key) for a particular access. Without provision of such a capability this access is not possible. A gate provides enough information to redefine the contents of the address space associated with a region as well as to define the chosen execution entry point into this new address space. Since the new address space may also contain gates, gates provide a tree-like access path through successive address space domains. A gate is comprised of a gate descriptor and a gate module. A gate descriptor is composed of a segment table pointer, a segment table length, and an entry point. The format of an exemplary gate descriptor is shown in Fig. 3. The entry point is associated with the routine being accessed in the guarded region. Gate descriptors are kept in a special segment that is known as a gate segment. For simplicity, in our description we will restrict gates to a particular region (i.e. Region 2). A gate module consists of the code that performs the gate functions and a control stack for keeping track of previous gate entrances. An exemplary format of a gate module is shown in Fig. 4.

A change domain instruction is used to transfer from one domain to another within one guarded region. The argument to this instruction is the gate number. In our implementation, processing a change domain instruction causes the following actions:

1. The gate number is used to access the gate segment to therein find the associated gate descriptor. If the gate descriptor is not valid, then a fault signal is generated.

2. The actual contents of the program counter are pushed onto a special control stack.

3. The present contents of the Region 2 (the Region in question) segment table pointer register and segment table length register are pushed onto the same special control stack.

4. The gate thus found is accessed and the associated new segment table pointer and new segment table length descriptors are placed in their associated Region 2 registers.

5. The gate entry point address is placed in the program counter.

A return domain instruction is used to return from a called domain within a guarded region. Basically, the old values of the region 2 segment table pointer and segment table length are popped taken from the top of from the control stack mentioned hereabove and restored into their associated region 2 registers, and the return address is also popped from the control stack and placed into the program counter.

The concept of a protection domain may have many embodiments employing different combinations of hardware and software. In what follows, we will present an embodiment of protection domains within the context of a 68000-based microprocessor system with a memory access controller (MAC) providing the memory management function. The domain entry/exit mechanism requires some extra hardware resources: an in-progress bit which reflects the status of a domain operation.

Domains can only be accessed through gates. The gate is an addressable object consisting of a gate descriptor of which an exemplary format is shown in Fig. 3 and a gate module of which an examplary format is shown in Fig. 4. The gate descriptor consists of sixteen bytes of eight bits each. In the first byte, one bit V contains the validity field. The descriptor is valid if $V = 0$. The remainder of this first byte is not used. The next three bytes (132) indicate the region segment table length. The next four bytes (134) contain the region segment table pointer. The next four bytes (136) contain the domain entry point. The final four bytes (138) at present are reserved for useful functions for possible future implementations.

In a gate segment, gate descriptor i is associated with gate i. Thus, when a gate descriptor is accessed via a domain call, the V bit of this descriptor determines whether the gate is valid. To protect against being accessed other than through a domain call, indirect gate descriptors by means of their E, W, R protection bits allow only a direct read access to be executable without resulting in a fault signal. Thus the R-bit (read) is set to '1'. The E(execute)-bit and W(write)-bit are set to zero. Thus a write-access or execute-access to a gate will cause a fault signal. As stated earlier, such fault signal will result in a call to the supervisory program.

The gate module (Fig. 4) is a special segment comprising code to change-of-domain operations and also a control stack (mentioned herebefore) to temporarily store previous domain calls. This special segment has no acute (E), read (R), or bite (W) permissions set. Thus, any access will cause the MAC to take some remedial action.

Calling a domain is an indivisible action. A standard jump subroutine instruction JSR (An) may be used to start the process. Here the contents of address register An are placed in the program counter (PC) and the address following the JSR instruction is pushed onto the system stack. The contents of register An must reference to the first page (0) of the gate module: the change domain code. After the JSR instruction is executed, the next instruction fetch will cause the MAC to process a descriptor with no access permissions $E = R = W = 0$. Ordinarily, this would result in an access violation causing the fault signal mentioned earlier. However, in this specific case an access violation is avoided for a domain change under the following circumstances:

1. The address applied to the MAC has a page number of 0 and an offset of 0.
2. The access is a program and read access.
3. The in-progress bit is not set.

If any of these conditions are not true, then nevertheless an access violation results. Otherwise the in-progress bit is set and the domain change starts. The in-progress bit affects the MAC protection mechanism in that while it is set all accesses are valid regardless of required permissions, as definable by E,R,W. The address in An is the first address of the gate module control code. After passing the MAC protection, the control program can be executed free from occurrance of access violations. This enables the control program to access all of the MAC's registers even without being in the supervisory state. Needles to see, the control programs must be faultless code, so that it may be trusted. This is ensured by extensive testing and/or simulating normal operative conditions. The in-progress bit also prevents a change domain instruction from being executed for a process before the previous change domain instruction for the same process has been completed. Thereto the in-progress bit is set upon exit from the control program. The control program will execute the following steps:

1. Decrement gate module stack pointer and increment stack counter.
2. Move return address from user stack to gate module stack.
3. Get gate number from top of user stack and access gate segment specified in gate module page 2.
4. If gate descriptor in gate segment associated with the gate number is not valid, then generate a fault signal.
5. Otherwise, access new STPR (134), STLR (132), and entry point (136) in the gate descriptor.
6. Place the old STPR and STLR in the gate module stack.
7. Place the domain entry point in register $A_0$, which is the first register defined in the microcontroller.
8. Place the STPR and STLR informations from the gate descriptor into the associated region 2 registers.
9. Execute the instruction JMP(MAC address), where the format is by way of example shown in Fig. 5. When this four-byte information is fetched from memory the MAC will be selected and execute command RA (six bits). Field RN of two bits specifies the region in question (here region 2 as mentioned earlier). Command RA operates on the region thus specified, resets the in-progress bit, and returns the jump instruction JMP ($A_0$). There, the processor will execute the jump instruction and the program counter will be positioned to execute the right instruction in the new domain.

Returning from a domain is an indivisible action. A standard jump instruction JMP may be used to start the process: JMP(An) Here the contents of address register An are placed in the program counter (PC). The contents of register An must reference the second page (1) of the gate module. After the JMP (An) instruction is executed, the next instruction fetch will cause the MAC to process a descriptor with no access permissions. Ordinarily, this would result in an access violation and a fault signal. But here an access violation is avoided for a domain change under the following circumstances:

1. The address applied to the MAC has a page number of 1 and an offset of 0.
2. The access is a program and read access.
3. The in-progress bit is not set.

If any of these conditions is not valid, then an access violation results, Otherwise the in-progress bit is set and the return starts. The in-progress bit affects the MAC protection mechanism in that, while it is set all accesses are valid. The address in An is the first one of the gate module return control code. After passing the MAC protection, the control program can be executed free from access violations. This enables the control program to access all of the MAC's registers without being in the supervisory state. Also for this to run correctly, the control program must be trusted code. The in-progress bit again prevents another domain instruction from being executed for a process before the previous domain instruction for the same process has been completed. The in-progress bit will be set upon exit from the control program. The control program will take the following steps:

1. Get the old STPR and STLR and the return address from the control stack.

2. Put the return address in register A0.

3. Restore the old STPR and STLR.

4. Execute the instruction JMP (MAC address), where the format is by way of example shown in Fig. 5, but for one difference in that the six bit command RA is now instead command RD. When this four-byte information is fetched from memory the MAC will be selected and execute command RD. Field RN in this example again specifies region 2. Command RD operates on the region thus specified, resets the in-progress bit and return the instruction JMP (A0). Then the processor will execute the jump instruction and the program counter will be positioned to execute the right instruction in the old domain.

The control stack is a simulated stack. It is entirely contained within one page of the gate module. It consists of a stack pointer, a stack counter, and an associated stack data area. Pushing an element onto the stack consists of decrementing the stack pointer and using it to index into the stack structure in order to place the new stacked data. In addition, the stack counter is incremented. The stack counter position indicates the number of elements on the stack. Popping an element from the stack involves using the stack pointer to index into the stack data area, accessing the data item, and then incrementing the stack pointer. In addition, the stack counter is decremented.

The microprocessor 68020 has an internal instruction cache. In order for the domain scheme to work correctly, this cache must also be accessed on domain entry and domain exit. This means some additions to the call domain and return domain commands. Activating the cache is a problem, since the command to do it must be executed in supervisory mode. Thus the cache will not be activated by the MAC. There is an external pin on the 68020 that, when provided with a signal, causes the 68020 to bypass its internal cache. This signal will be generated upon the first call in a series of domain calls and terminated upon the last return from this series of domain calls. An internal flip-flop will handle this generating. On the first domain call the MAC sets the flip-flop and on the last domain call the MAC resets the flip-flop. In the software there is a domain counter, i.e. the stack counter, which is initially set to 0. On a change domain command the counter is incremented while on a return domain command the counter is decremented. A counter transition from position 0 to position 1 causes the external flip-flop to be set, while a counter transition from 1 to 0 causes the external flip-flop to be reset. This internal flip-flop can be indirectly addressed through the MAC. It is up to the software to activate the 68020 cache to avoid the problem of data gone stale across context switches.

Commands are necessary to read and write the in-progress bit. These commands are RI and WI. Command RI reads and resets the in-progress bit, while command WI writes the in-progress bit.

Something must be done to the in-progress bit if there is an interrupt generated during a domain operation, otherwise the interrupt routine will be executed with no protection. The solution is to read and reset the in-progress bit on entry to the interrupt routine and to restore the in-progress bit on return from the interrupt routine.

The change-domain command can be implemented with the following 68000 code (See also the 68000 User Manual):

10

```
movea.l   stackcntr,A0      get stack counter           16(4/0)
addq.l    #1,A0             increment stack counter      8(1/0)
lea.l     stackcntr,A1      get stack counter address    8(2/0)
move.l    A0,(A1)           update stack counter        12(1/2)
movea.l   stackpointer,A0   get simulated stack         16(4/0)
                            pointer
addq.l    #2,A0             increment stack pointer      8(1/0)
move.l    (A7)+,(A0)        put return address in stack 20(3/2)
move.l    (A7)+,D0          get gate #                  12(3/0)
asl.w     #4,D0             multiply by 16              10(1/0)
move.l    gatesegment,A1    get gate segment address    16(4/0)
adda.l    D0,A1             compute gate address         8(1/0)
move.l    (A1),D0           get first word of gate      12(3/0)
bmi.l     error             error if invalid V=1        10(2/0)
addq.l    #2,A0             increment stack pointer      8(1/0)
move.l    MACadrSTPR,(A0)   put old STPR on stack       28(5/2)
addq.l    #2,A0             increment stack pointer      8(1/0)
move.l    MACadrSTLR,(A0)   put old STLR on stack       28(5/2)
lea.l     stackpointer,A2   get stack pointer address    8(2/0)
move.l    A0,(A2)           update stack pointer        12(1/2)
move.l    (A1)+,MACadrSTLR  put new value in STLR       28(5/2)
move.l    (A1)+,MACadrSTPR  put new value in STPR       28(5/2)
move.l    (A1),A0           put entry address in A0     12(3/0)
jmp.l     MACadrE           prepare to jump to entry    12(3/0)
                            point

          resultant instruction

jmp.l     (A0)              jump to entry point          8(2/0)
```

The change domain command takes 336 clock cycles. Here it is assumed the registers $A_0$, $A_1$, $A_2$ and $D_0$ are saved on entry to a domain and are restored on return from that domain.

The return domain call can be implemented with the following 68000 code:

```
move.l      stackcntr,A₁        get stack counter               16(4/0)
beq.l       error               one domain return too many     10(2/0)
subq.l      #1,A₁               decrement stack counter         8(2/0)
lea.l       A₁,(A₀)             update stack counter           12(1/2)
movea.l     stackpointer,A₁     get simulated stack            16(4/0)
                                pointer
move.l      (A₁),MACadrSTLR     put old value in STLR           28(5/2)
subq.l      #2,A₁               pop stack                       8(1/0)
move.l      (A₁),MACadrSTPR     put old value in STPR           28(5/2)
subq.l      #2,A₁               pop stack                       8(1/0)
move.l      A₁,(A₀)             put return address in A₀       12(3/0)
subq.l      #2,A₁               pop stack                       8(1/0)
lea.l       stackpointer,A₂     get stack pointer address       8(2/0)
move.l      MACadrR             prepare to return              12(3/0)

            resultant instruction

jmp.l       (A₀)                jump to entry point             8(2/0)
```

The return domain call takes 202 clock cycles.

Other domain returning procedures are possible. For instance, an error return domain call could pop the control stack and return to the initial program issuing the first domain call in a series of nested domain calls.

List of figure captions:

Fig. 1:22:microcontroller; 24:cache controller;26:translation look-aside buffer; 28:page description RAM; 30:content addressable memory; 32:content addressable memory; 34:random access memory; 36:registerbank;38:barrel shifter; 40:control register; 42:decoding logic; 44:bus controller; 46:ALU; 48,50:protection logic; 66:AND-gate; Fig. 2:100:system memory; 102:operating system; 104:system library; 106:process A, code plus data; 108:process B; code plus data; 110-118:operating system; 114,122:system library; 116:process A, code plus data; 118:process B,code plus data; Fig. 3: 130:not used; 132:segment table length; 134:segment table pointer; 136:entry point; 138:reserved; Fig. 4: 140:change domain code; 142:return domain code; 144:gate segment pointer; 146:stack counter; 148:stack pointer; Fig. 5:150:MAC address.

**Claims**

1. A computer system comprising a processor and a memory, coupled to each other via address translation means for translating virtual addresses issued by the processor into physical addresses applied to the memory, the translation means (20) being arranged to use a plurality of translation tables for at least one process executable on said processor, each table directing how a respective region (fig. 2) of virtual address space is to be translated, the system comprising gate means, storing an entry point address (136), characterized in that the gate means also store a pointer (134) to a further translation table, the gate means being activatable by a request from the processor to execute instructions starting with said entry point address, the gate means being arranged to control that for the duration of execution of said instructions starting with said entry point after said request, in the use by the translation means at least one of the translation tables is replaced by the further translation table.

2. A computer system according to Claim 1, the gate means having an associated first address (fig 4, pg ∅, the gate means being arranged for detecting whether the processor issues the first address for fetching an instruction from a location corresponding to said first address, and for thereupon controlling said replacing and causing the processor to jump to said entry point address.

3. A computer system according to Claim 1, the gate means having an associated second address (fig 4, pg 1), the gate means being arranged for detecting whether the processor issues the second address for fetching an instruction from said location, and for thereupon controlling restoring of said one of the translation tables table to its state before said replacing.

4. A computer system according to Claim 3, further including a stack for storing return information for said restoring, for use upon exit from executing said instructions starting at said entry point.

5. A computer system according to Claim 2, 3 or 4, wherein each translation table is accessible via an associated segment table pointer and segment table length, the gate means comprising a gate descriptor containing
   - a further table pointer (134) and a further table length (132) of a further segment table and
   - the entry point (136),
said replacement being effected by replacing the segment table pointer and the segment table length by the further table pointer and further table length.

6. A computer system according to Claim 5, wherein each the gate means comprise a gate module containing
   - instructions (140, 142) for instructing the processor in response to said first and second addresses, for responding to said activation,
   - the gate descriptor.

7. A computer system according to any one of the Claims 1 to 6, wherein the address translation means are arranged for identifying, for each virtual address issued, in which of a plurality of partitions, each containing a programmable part of address space, said virtual address lies, and for selecting a particular address translation table corresponding to said partition for said translation.

8. A computer system according to any one of the Claims 1 to 7, wherein said further translation table comprises a gate segment which contains a list of gates activatable during execution of said instructions starting at said entry points.

9. A memory address control device (20) for use in a computer system in any one of the Claims 1 to 8, the memory access control device containing the address translation means and the gate means, and having a first connection (52, 54) for receiving virtual addresses from the processor, and a second connection (58, 64) for transmitting physical addresses to a memory.

10. A device according to Claim 9, wherein said device is included in a single integrated circuit chip.

11. A memory system for a computer system according to any one of the Claims 1 to 8, comprising the memory, the memory access control device containing the address translation means and the gate means, and having a first connection (52, 54) for receiving virtual addresses from the processor.

12. A memory system according to Claim 10, wherein the memory supports a paged organization.

**Patentansprüche**

1. Computersystem, mit einem Prozessor und einem Speicher, die durch Adreßumsetzungsmittel zur Umsetzung von vom Prozessor ausgegebenen virtuellen Adressen in dem Speicher zugeführte physikalische Adressen miteinander verbunden sind, wobei die Umsetzungsmittel (20) so angeordnet sind, daß sie eine Vielzahl von Umsetzungstabellen für mindestens einen im genannten Prozessor ablauffähigen Prozeß verwenden und jede Tabelle bestimmt, wie ein jeweiliges Gebiet (Fig. 2) virtuellen Adreßraums umzusetzen ist, und wobei das System Gatemittel umfaßt, die eine Einsprungstellenadresse (136) speichern, dadurch gekennzeichnet, daß die Gatemittel außerdem einen Zeiger (134) auf eine weitere Umsetzungstabelle speichern, wobei die Gatemittel durch eine Anforderung des Prozessors zur Ausführung von Befehlen, beginnend an der genannten Einsprungstellenadresse, aktiviert werden können und so angeordnet sind, daß sie für die Dauer der Ausführung dieser Befehle, beginnend an der genannten Einsprungstelle nach dieser Anforderung, bei der Verwendung durch die Umsetzungsmittel kontrollieren, ob mindestens eine der Umsetzungstabellen durch die weitere Umsetzungstabelle ersetzt wird.

2. Computersystem nach Anspruch 1, bei dem die Gatemittel eine zugeordnete erste Adresse (Fig. 4, Pg 2) haben und so angeordnet sind, daß sie feststellen, ob der Prozessor die erst Adresse zum Abrufen eines Befehls von einem dieser ersten Adresse entsprechenden Speicherplatz ausgibt, und danach das Ersetzen überwachen und den Prozessor veranlassen, zu der genannten Einsprungstellenadresse zu springen.

3. Computersystem nach Anspruch 1, bei dem die Gatemittel eine zugeordnete zweite Adresse (Figur 4, Pg 1) haben und so angeordnet sind, daß sie feststellen, ob der Prozessor die zweite Adresse zum Abrufen eines Befehls von diesem Speicherplatz ausgibt, und danach die Wiederherstellung einer der Umsetzungstabellen in ihren Zustand vor dem Ersetzen überwachen.

4. Computersystem nach Anspruch 3, das weiterhin einen Stack zum Speichern von Rücksprunginformationen für diese Wiederherstellung enthält, welcher nach Beendigung der Ausführung dieser Befehle, beginnend an der Einsprungstelle, Verwendung findet.

5. Computersystem nach Anspruch 2, 3 oder 4, bei dem auf jede Umsetzungstabelle über einen zugeordneten Segmenttabellenzeiger und eine Segmenttabellenlänge zugegriffen werden kann; wobei die Gatemittel einen Gatedeskriptor mit folgendem Inhalt enthalten:
   - einen weiteren Tabellenzeiger (134) und eine weitere Tabellenlänge (132) einer weiteren Segmenttabelle, und
   - die Einsprungstelle (136),
   wobei das Ersetzen durch Ersetzen des Segmenttabellenzeigers und der Segmenttabellenlänge durch den weiteren Tabellenzeiger und die weitere Tabellenlänge erfolgt.

6. Computersystem nach Anspruch 5, bei dem jedes der Gatemittel ein Gatemodul mit folgendem Inhalt enthält:
   - Befehle (140, 142) an den Prozessor als Antwort auf die genannte erste und zweite Adresse zur Reaktion auf die genannte Aktivierung,
   - den Gatedeskriptor.

7. Computersystem nach einem der Ansprüche 1 bis 6, bei dem die Adreßumsetzungsmittel angeordnet sind, um für jede ausgegebene virtuelle Adresse festzustellen, in welcher der Vielzahl von Partitions, von denen jede einen programmierbaren Teil des Adreßraums enthält, sich die genannte virtuelle Adresse befindet, und daß sie eine bestimmte Adreßumsetzungstabelle auswählen können, die dieser Partition für die Umsetzung entspricht.

8. Computersystem nach einem der Ansprüche 1 bis 7, bei dem die weitere Umsetzungstabelle ein Gatesegment beinhaltet, das eine Liste von während der Ausführung der Befehle aktivierbaren Gates, beginnend an den Einsprungstellen, enthält.

9. Speicherzugriffssteueranordnung (20) zur Verwendung in einem Computersystem nach einem der Ansprüche 1 bis 8, wobei die Speicherzugriffssteueranordnung die Adreßumsetzungsmittel und Gatemittel enthält und einen ersten Anschluß (52, 54) zum Empfang virtueller Adressen vom Prozessor und einen zweiten Anschluß (58, 64) zum Übertragen physikalischer Adressen in einen Speicher aufweist.

10. Anordnung nach Anspruch 9, wobei diese Anordnung auf einem einzigen IC-Chip enthalten ist.

11. Speichersystem für ein Computersystem nach einem der Ansprüche 1 bis 8, das den Speicher, die Speicherzugriffssteueranordnung mit den Adreßumsetzungsmitteln und die Gatemittel umfaßt und einen ersten Anschluß (52, 54) zum Empfangen virtueller Adressen vom Prozessor hat.

14

**12.** Speichersystem nach Anspruch 10, bei dem der Speicher eine in Seiten unterteilte Organisation unterstützt.

**Revendications**

**1.** Système informatique comprenant un processeur et une mémoire couplés l'un à l'autre via des moyens de traduction d'adresse destinés à traduire des adresses virtuelles émises par le processeur en des adresses physiques appliquées à la mémoire, les moyens de traduction (20) étant conçus pour utiliser une pluralité de tables de traduction pour au moins un processus exécutable sur le processeur, chaque table régissant la manière selon laquelle une région (Fig. 2) respective d'espace d'adressage virtuel doit être traduite, le système comprenant des moyens à porte stockant une adresse de point d'entrée (136), caractérisé en ce que les moyens à porte stockent également un pointeur (134) destiné à une autre table de traduction, les moyens à porte pouvant être activés par une demande du processeur pour exécuter des instructions débutant par l'adresse de point d'entrée, les moyens à porte étant conçus pour faire en sorte que, pendant la durée d'exécution des instructions débutant par le point d'entrée, après la demande, au cours de l'utilisation par les moyens de traduction, au moins une des tables de traduction est remplacée par l'autre table de traduction.

**2.** Système informatique suivant la revendication 1, les moyens à porte comportant une première adresse associée (Fig. 4, pg 0), ces moyens à porte étant prévus pour détecter si le processeur émet la première adresse pour extraire une instruction d'un emplacement correspondant à la première adresse et pour commander ensuite le remplacement et amener le processeur à sauter vers l'adresse de point d'entrée.

**3.** Système informatique suivant la revendication 1, les moyens à porte comportant une seconde adresse associée (Fig. 4, pg 1), ces moyens à porte étant prévus pour détecter si le processeur émet la seconde adresse pour extraire une instruction de l'emplacement et pour commander ensuite le rétablissement de ladite table de traduction dans son état précédant le remplacement.

**4.** Système informatique suivant la revendication 3, comprenant une pile pour stocker de l'information de retour pour le rétablissement, à utiliser lors de la sortie de l'exécution des instructions débutant au point d'entrée.

**5.** Système informatique suivant la revendication 2, 3 ou 4, dans lequel la table de traduction est accessible via un pointeur de table de segments associé et une longueur de table de segments, les moyens à porte comprenant un descripteur de porte contenant :
   - un autre pointeur de table (134) et une autre longueur de table (132) d'une autre table de segments, et
   - le point d'entrée (136), le remplacement étant effectué en remplaçant le pointeur de table de segments et la longueur de table de segments par l'autre pointeur de table et l'autre longueur de table.

**6.** Système informatique suivant la revendication 5, dans lequel chacun des moyens à porte comprend un module de porte contenant :
   - des instructions (140, 142) destinées au processeur, en réponse à la première et à la seconde adresse, en vue de réagir à l'activation,
   - le descripteur de porte.

**7.** Système informatique suivant l'une quelconque des revendications 1 à 6, dans lequel les moyens de traduction d'adresse sont conçus pour identifier, pour chaque adresse virtuelle émise, la partition parmi une pluralité de partitions contenant chacune une partie programmable d'espace d'adressage dans laquelle se trouve l'adresse virtuelle et pour sélectionner une table de traduction d'adresse particulière correspondant à la partition pour la traduction.

**8.** Système informatique suivant l'une quelconque des revendications 1 à 7, dans lequel l'autre table de traduction comprend un segment de porte qui contient une liste de portes pouvant être activées pendant l'exécution des instructions débutant aux points d'entrée.

15

9. Contrôleur d'accès de mémoire (20) à utiliser dans un système informatique suivant l'une quelconque des revendications 1 à 8, le contrôleur d'accès de mémoire contenant les moyens de traduction d'adresse et les moyens à porte et comportant une première connexion (52, 54) destinée à recevoir des adresses virtuelles du processeur et une seconde connexion (58, 64) destinée à transmettre des adresses physiques à une mémoire.

10. Dispositif suivant la revendication 9, dans lequel le dispositif est incorporé dans une seule puce de circuit intégré.

11. Système de mémoire pour un système informatique suivant l'une quelconque des revendications 1 à 8, comprenant la mémoire, le contrôleur d'accès de mémoire contenant les moyens de traduction d'adresse et les moyens à porte et comportant une première connexion (52, 54) destinée à recevoir des adresses virtuelles du processeur.

12. Système de mémoire suivant la revendication 10, dans lequel la mémoire est organisée en pages.

FIG.1

FIG.2

| 31 | 130 | 15 | 132 | 0 |
|---|---|---|---|---|
| V | N US | | SEGM TAB L | |

134 — SEGM TAB P

136 — ENTR P

138 — RES

# FIG.3

Pg 0 — CHNG DOM COD — 140

Pg 1 — RETRN DOM COD — 142

Pg 2 — GAT SEGM P — 144

STCK COUN — 146

STCK P — 148

# FIG.4

| 31 | 9 | 6 | 1 |
|---|---|---|---|
| 150 — MAC ADD | RN | RA | |

# FIG.5